(19) Europäisches Patentamt
European Patent Office
Office européen des brevets

(11) **EP 1 785 603 B1**

(12) **EUROPEAN PATENT SPECIFICATION**

(45) Date of publication and mention
of the grant of the patent:
**24.06.2009 Bulletin 2009/26**

(51) Int Cl.:
*F01N 3/02* (2006.01)   *F01N 3/08* (2006.01)
*F01N 3/24* (2006.01)   *B01D 39/14* (2006.01)
*B01D 53/94* (2006.01)   *B01J 23/58* (2006.01)
*B01J 23/76* (2006.01)   *B01J 35/04* (2006.01)

(21) Application number: **05774693.5**

(22) Date of filing: **26.08.2005**

(86) International application number:
**PCT/JP2005/015551**

(87) International publication number:
**WO 2006/025283 (09.03.2006 Gazette 2006/10)**

(54) **EXHAUST GAS PURIFICATION SYSTEM**

ABGASREINIGUNGSSYSTEM

CIRCUIT D'ÉPURATION DE GAZ D'ÉCHAPPEMENT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.08.2004  JP 2004252889**

(43) Date of publication of application:
**16.05.2007  Bulletin 2007/20**

(73) Proprietor: **IBIDEN CO., LTD.
Ogaki-shi, Gifu 503-8604 (JP)**

(72) Inventor: **OHNO, Kazushige
ta, Ibigawa-cho, Ibi-gun, Gifu 5010695; (JP)**

(74) Representative: **Grünecker, Kinkeldey,
Stockmair & Schwanhäusser
Anwaltssozietät
Leopoldstrasse 4
80802 München (DE)**

(56) References cited:
EP-A- 1 329 604          EP-A1- 1 142 619
WO-A-20/04099578      DE-A1- 3 711 294
DE-A1- 19 850 757     JP-A- 7 127 434
JP-A- 7 127 434          JP-A- 2000 145 430
JP-A- 2000 145 430     JP-A- 2001 096 116
JP-A- 2002 301 320     JP-A- 2002 301 320
JP-A- 2003 206 733     US-A1- 2004 074 231

**Description**

Technical Field

The present invention relates to an exhaust gas cleanup system.

Background Art

Conventionally, as an exhaust gas cleanup system, one has been proposed which includes a support that supports an NOx storage agent (barium, etc.) and an oxidation catalyst (platinum, etc.) disposed on the upstream of exhaust gas flow and a diesel particulate filter (hereinafter, referred to as DPF) supporting an oxidation catalyst (platinum, etc.) disposed on the downstream. For example, the apparatus disclosed in JP-A 2002-153733 regenerates the DPF by burning, at low temperature, particulate materials trapped by the DPF disposed on the downstream by using $NO_2$ produced by oxidizing NOx stored in the NOx storage agent, and converts NOx, HC, and CO contained in the exhaust gas by using the oxidation catalyst supported on the DPF.
Another example is disclosed in JP 2000 1 45 430, which shows a filter distanced 1 m or less from the internal combustion engine.

Disclosure of the Invention

However, in the exhaust gas cleanup system disclosed in the publication, when oxidizing and burning the particulate materials trapped by the DPF disposed on the downstream by using $NO_2$, NO may be produced and exhausted to the outside of a vehicle, or in the case of imperfect combustion of the particulate materials, CO may be produced and exhausted to the outside of the vehicle, and exhaust gas cleaning is not adequately achieved.

The invention was made in view of these circumstances, and an object thereof is to provide an exhaust gas cleanup system which can easily regenerate a cleanup apparatus as a purifying apparatus that removes particulate materials and can converts a plurality of harmful substances contained in an exhaust gas.

In order to achieve the above object, the exhaust gas cleanup system of the invention is constructed as follows.

The exhaust gas cleanup system of the invention cleans an exhaust gas exhausted from an internal combustion engine, comprising:

a first cleanup apparatus that supports a predetermined supporting amount of a first catalyst and purifies particulate materials in the exhaust gas; and a second cleanup apparatus that supports a predetermined supporting amount of a second catalyst and converts the exhaust gas which has passed through the downstream of the first cleanup apparatus, wherein the first cleanup apparatus is disposed at a position of an exhaust path length of 1m or less from the internal combustion engine.

In this exhaust gas cleanup system, the first cleanup apparatus is disposed at a position of an exhaust path length of 1m or less from the internal combustion engine, so that the exhaust gas reaches the first cleanup apparatus while keeping a high temperature without great heat removal by the exhaust path (for example, exhaust pipe, or the like). As a result, the first catalyst supported by the first cleanup apparatus is quickly raised in temperature by the exhaust gas to sufficiently perform its catalyst function, so that trapped particulate materials are easily burned. On the downstream of the first cleanup apparatus, the second cleanup apparatus that converts the exhaust gas is disposed, so that harmful substances (NOx, HC, CO, and so on) produced due to combustion of the internal combustion engine and harmful substances (CO, etc.) produced due to imperfect combustion of a part of the particulate materials trapped in the first cleanup apparatus can be converted. Therefore, the first cleanup apparatus can be easily regenerated and a plurality of harmful substances can be converted. Herein, "exhaust path length from the internal combustion engine" means the length from the extreme upstream portion of exhaust gas flow to the front end of the first cleanup apparatus. Also, "predetermined supporting amount" may be defined as a supporting amount that sufficiently purifies/converts the harmful substances contained in the exhaust gas.

In the exhaust gas cleanup system of the invention, the first cleanup apparatus preferably has a porosity of 60% or more, more preferably 75% or more, and most preferably 80% or more. A porosity of less than 60% is not preferable for efficient burning of particulate materials since this makes it difficult to make the particulate materials trapped in the first cleanup apparatus come into contact with the first catalyst supported by the first cleanup apparatus. The first cleanup apparatus preferably has a porosity of 95% or less. When the porosity exceeds 95%, this is not preferable since the material forming the wall of the first cleanup apparatus is reduced, resulting in strength lowering.

In the exhaust gas cleanup system of the invention, the first cleanup apparatus may be a honeycomb filter including lamination in the longitudinal direction of two or more sheet-like members with a plurality of through holes so as to communicate the through holes with each other to form communicating holes. Thereby, even when a temperature difference occurs in the longitudinal direction of the first cleanup apparatus due to combustion heat of the particulate materials and a heat stress is applied, the stress is reduced between the lamination of the sheet-like members, so that damage due to the heat stress is less likely to occur than in the case of integral molding in the longitudinal direction. In the honeycomb filter, the end faces of the plurality of through holes may be alternately clogged.

In the exhaust gas cleanup system of the invention, the honeycomb filter may be mainly made of one or more kinds selected among inorganic fibers and inorganic foams. Thereby, a filter with a porosity of 60% or more (in particular, 75% or more) can be comparatively easily realized by using the inorganic fibers and inorganic foams. The inorganic fibers may be, for example, metal fibers or ceramic fibers. Examples of metal fibers include fibers of one or more kinds selected among copper, iron (chromium-based stainless steel, chrome-nickel-based stainless steel, etc.), aluminum, and examples of ceramic fibers includes fibers of one or more kinds selected among oxide-based fibers such as alumina, silica, silica-alumina, and potassium titanate, and carbide-based fibers such as silicon carbide. The inorganic foams may be, for example, metal foams or ceramic foams, and metal foams are preferable since they have high strength. Examples of metal foams include foams of one or more kinds selected among copper, iron (chromium-based stainless steel, chrome-nickel-based stainless steel, etc.), and aluminum, and examples of ceramic foams include foams of one or more kinds selected among cordierite, alumina, mullite, silica, silicon carbide, and aluminum titanate.

In the exhaust gas cleanup system of the invention, the second cleanup apparatus may be disposed at a position of an exhaust path length of 3m or less from the internal combustion engine. Thereby, the exhaust gas reaches the second cleanup apparatus without great heat removal by the exhaust path (for example, an exhaust pipe), so that the second catalyst supported by the second cleanup apparatus is made to function by using the exhaust gas heat, and a plurality of harmful substances contained in the exhaust gas are easily converted.

In the exhaust gas cleanup system of the invention, the second cleanup apparatus may be a honeycomb structure including a porous honeycomb unit that have a plurality of through holes and have a sectional area of $50cm^2$ or less orthogonal to the through holes, and a sealing material layer that joins two or more of the porous honeycomb units on their outer faces with no through holes being open. Thereby, the plurality of porous honeycomb units are structured so as to be joined to each other via a sealing material layer, so that strength against thermal shock or vibrations can be increased. When the area of the section orthogonal to the through holes exceeds $50cm^2$, the size of the honeycomb unit is excessively large and a heat stress applied to each honeycomb unit cannot be sufficiently reduced. In addition, the sectional area of the plane orthogonal to the through holes is preferably $5cm^2$ or more. The sectional area of less than $5cm^2$ is not preferable since the sectional area of the sealing material layer that joins a plurality of porous honeycomb units relatively increases, and the specific surface area to support the catalyst becomes relatively small and the pressure loss increases. Herein, the sectional area of the porous honeycomb unit means the sectional area of the porous honeycomb unit as a basic unit forming the honeycomb structure when the honeycomb structure includes a plurality of porous honeycomb units with different sectional areas, and is normally the maximum sectional area of the porous honeycomb unit. In addition, the total sectional area of the porous honeycomb units preferably occupies 85% or more of the sectional area of the honeycomb structure, and more preferably, occupies 90% or more. The percentage of less than 85% is not preferable since the percentage of the total sectional area of the sealing material layer to the sectional area of the honeycomb structure becomes relatively high, the total sectional area of the porous honeycomb units is reduced, so that the specific surface area supporting the catalyst becomes relatively small or the pressure loss increases.

In the exhaust gas cleanup system of the invention, the porous honeycomb unit may contain at least ceramic particles and inorganic fibers. Thereby, a honeycomb structure that highly disperses the catalyst and has increased strength against thermal shock and vibrations can be comparatively easily realized. Herein, examples of ceramic particles include particles of one or more kinds selected among alumina, silica, zirconia, titania, ceria, and mullite, and among these, alumina is preferable. As inorganic fibers contained in the honeycomb structure, the inorganic fibers explained in the honeycomb filter may be used, and among these, silica-alumina fibers are preferable. The honeycomb structure may further include inorganic binders as material. Thereby, sufficient strength is obtained even after firing at a comparatively low temperature. The inorganic binders to be contained in the honeycomb structure may be, for example, inorganic sols or clay-based binders. Examples of inorganic sols include one or more kinds of inorganic sols selected among alumina sol, silica sol, titania sol, water glass, and so on are available. Examples of clay-based binders include one or more kinds of clay-based binders selected among white clay, kaolin, montmorillonite, and clays with chain structures (sepiolite, attapulgite). Among these, silica sol is preferable as an inorganic binder.

In the exhaust gas cleanup system of the invention, the first catalyst supported by the first cleanup apparatus is preferably an oxidation catalyst that lowers combustion energy of particulate materials, and may be, for example, one or more kinds of oxidation catalysts selected among precious metals, and oxides. Example of precious metals include one or more kinds selected among platinum, palladium, rhodium, and examples of oxides includes $CeO_2$ and oxides with a perovskite structures. Among these, an oxide with a perovskite structure is preferable. Precious metals such as platinum to be used as a catalyst are very expensive, and are limited precious resources. Therefore, it is preferable that these are used as little as possible. An oxide having a perovskite structure is, for example, an oxide using one or more elements selected among La, Y, Ce, and so on for the A site of the perovskite structure (general formula: $ABO_3$), where La is preferable among these elements, and using one or more elements selected among Fe, Co, Ni, Mn, and so on for the B site of the general formula. In addition, a part of the elements of the A site may be substituted by K, Sr, Ag, and so on, such as $La_{0.75}K_{0.25}CoO_3$.

In the exhaust gas cleanup system of the invention, the second catalyst supported by the second cleanup apparatus is preferably an oxidation catalyst and an NOx storage agent which can convert harmful substances (NOx, CO, HC, and so on) contained in the exhaust gas. The oxidation catalyst may be, for example, precious metals, and the NOx storage agent may contain, for example, one or more kinds selected from a group consisting of alkali metals and alkaline earth metals. Herein, examples of precious metals include one or more kinds selected among platinum, palladium, and rhodium, and examples of alkali metals include one or more kinds selected from potassium, sodium, and examples of alkaline earth metals include barium.

The physical properties used in this specification were determined as follows. The average diameter of the inorganic fibers was determined by using an SEM with reference to JIS A9504. The length of the inorganic fibers was also determined by using an SEM. An optical microscope or laser microscope may instead be used. The average diameter of $\gamma$-alumina and $\alpha$-type silicon carbide particles was determined by a laser diffraction scattering method by using a Mastersizer Micro made by MALVERN.

BRIEF DESCRIPTION OF THE DRAWINGS

FIG. 1 is a drawing showing the outline of the construction of an exhaust gas cleanup system 10 of an embodiment;
FIG. 2 is an explanatory view of a honeycomb filter 30 of the embodiment;
FIG. 3 is an explanatory view of a honeycomb filter 30 of the embodiment;
FIG. 4 is an explanatory view of a honeycomb structure 40 of the embodiment;
FIG. 5 is a schematic view of purification of particulatematerials by the honeycomb filter of the embodiment;
FIG. 6 is a schematic view of conversion of harmful substances by the honeycomb structure of the embodiment;
FIG. 7 is a drawing showing the outline of the construction of an exhaust gas cleanup system 50 of another embodiment;
FIG. 8 is an explanatory view of a honeycomb filter 130 of another embodiment;
FIG. 9 is an explanatory view of a honeycomb structure 140 of another embodiment;
FIG. 10 is an explanatory view of an exhaust gas cleanup measuring device 60; and
FIG. 11 is an explanatory view of measuring conditions of a 10-15 mode exhaust gas measuring test.

Best Mode for Carrying Out the Invention

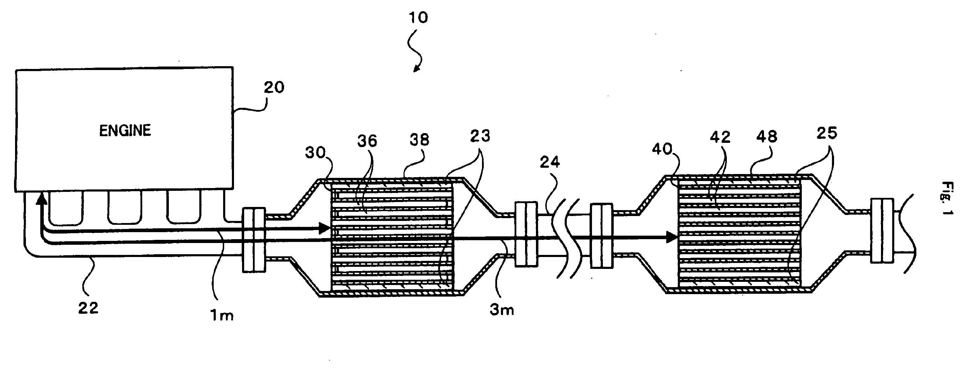

Next, a best mode for carrying out the invention is described with reference to the drawings. FIG. 1 is a schematic view of the construction of an exhaust gas cleanup system 10 of this embodiment. The exhaust gas cleanup system 10 includes a manifold 22 connected to an engine 20, through which an exhaust gas produced by burning a fuel flows, a first casing 38 connected to the manifold 22, a honeycomb filter 30 as a first cleanup apparatus that supports a first catalyst and is retained via an alumina mat 23 inside the first casing 38, an exhaust pipe 24 connected to the first casing 38, through which an exhaust gas flows, a second casing 48 connected to the exhaust pipe 24, and a honeycomb structure 40 as a second cleanup apparatus which supports a second catalyst and is retained via an alumina mat 25 inside the second casing 48. The exhaust gas cleanup system 10 is mounted in a vehicle (automobile). In this exhaust gas cleanup system 10, the honeycomb filter 30 is disposed at a position of, as shown in FIG. 1, an exhaust path length of 1m or less from the engine 20, that is, an exhaust path length of 1m or less from the extreme upstream portion of the manifold 22 through which an exhaust gas flows to the front end of the honeycomb filter 30. The honeycomb structure 40 is disposed at a position of an exhaust path length of 3m or less from the extreme upstream portion of the manifold 22 through which the exhaust gas flows to the front end of the honeycomb structure 40.

The engine 20 is constructed as a diesel engine (internal combustion engine) that generates a driving force by burning a hydrocarbon-based fuel such as light oil by fuel injection into air compressed by a piston. The exhaust gas from the engine 20 contains nitrogen oxide (NOx), hydrocarbon (HC), carbon monoxide (CO), and particulate materials (hereinafter, referred to as PM) produced from carbon or the like contained in the fuel.

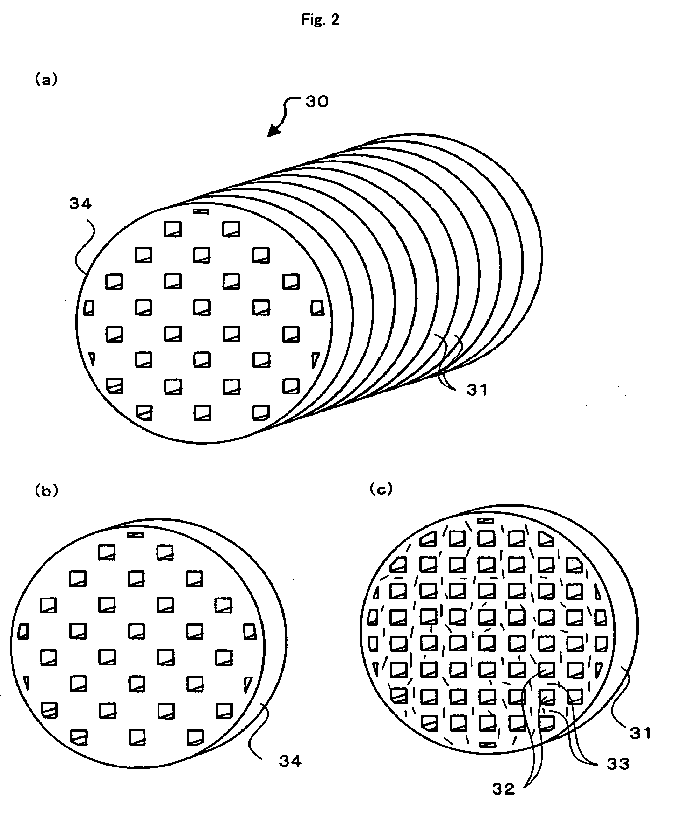

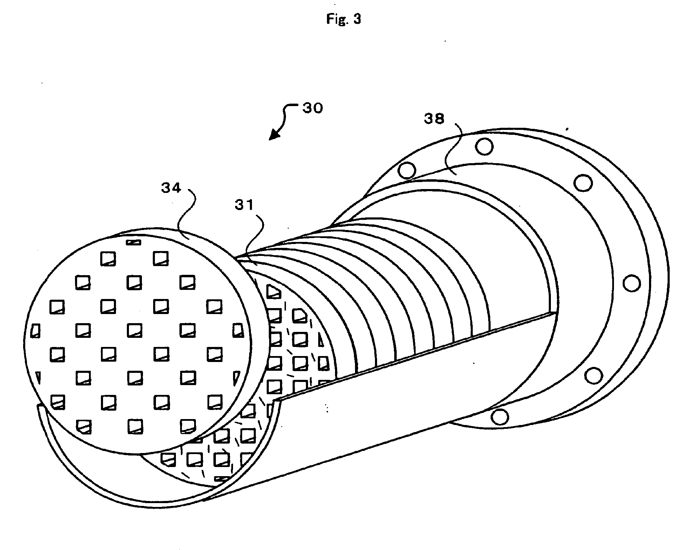

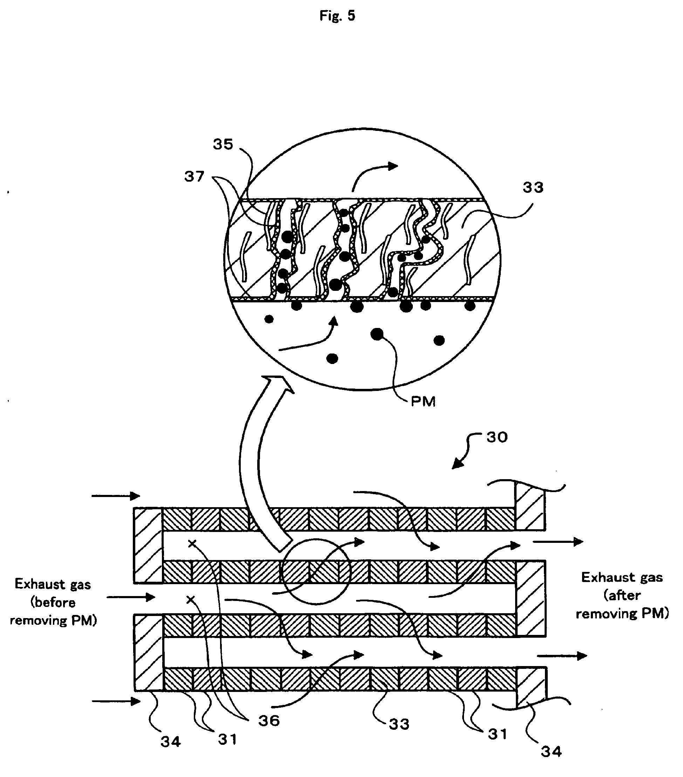

The honeycomb filter 30 is a filter for removing PM contained in the exhaust gas of the engine 20. FIG. 2 is an explanatory view of the honeycomb filter 30, wherein (a) is a perspective view of the honeycomb filter 30, (b) is a perspective view of an end portion sheet-like member 34, and (c) is a perspective view of a sheet-like member 31, and FIG. 3 is an explanatory view of the honeycomb filter 30 and the first casing 38. The honeycomb filter 30 is formed by laminating, in the longitudinal direction, two or more disk-shaped inorganic fiber-made sheet-like members 31 having a plurality of through holes 32 so that the through holes 32 communicate with each other to form communicating holes 36 (see FIG. 5). On both ends of the honeycomb filter 30, metal-made end portion sheet-like members 34 are disposed, and a pressure is applied in this lamination direction to fix the filter inside the first casing 38. In the honeycomb filter 30, the plurality of the communicating holes 36 are arranged side by side along the longitudinal direction, and end faces of the communicating holes 36 are alternately clogged. Therefore, the exhaust gas flows into the communicating holes 36 the upstream sides of which are open in the honeycomb filter 30, and then passes through the wall part 33 and moves to the communicating holes 36 the downstream side of which is open, and flows out from the honeycomb filter 30 through the communicating holes 36. In this course, PM contained in the exhaust gas is trapped when it passes through the wall part 33. A greater amount of heat or pressure caused by the exhaust gas may be applied to the end faces of the honeycomb filter 30 than to the inner face of the honeycomb filter 30, however, the end portion sheet-like members 34 are made of metal, so that the honeycomb filter 30 can be prevented from being damaged. The thicknesses of the sheet-like members 31 and the end portion sheet-like members 34 are preferably in a range of 0.1 to 20mm. One end portion sheet-like member 34 may be disposed each on both ends of the lamination of the sheet-like members 31, or several end portion sheet-like members may be disposed. Herein, the end portion sheet-like members 34 are made of metal, however, they may be made of any material such as the same material as the sheet-like members 31 or materials that can be used for the sheet-like members 31 (various materials described later). In this case, it is preferable that the end portion sheet-like members 34 have strength higher than that of the sheet-like members 31. Particularly, when the sheet-like members 31 are made of metal, the honeycomb filter 30 is easily prevented from being damaged even in use under bad conditions.

The honeycomb filter 30 is formed to have a porosity of 75 to 95%. In this range, the filter efficiently burns PM and obtains sufficient strength. The apparent density of the honeycomb filter 30 is preferably 0.05 to 1.00g/cm$^3$, and more preferably 0.10 to 0.50g/cm$^3$.

The sectional area of the through hole 32 formed in the honeycomb filter 30 is preferably 1.4mm$\times$1.4mm to 16mm$\times$16mm. The thickness (wall thickness) of the wall part 33 between the through holes 32 is preferably in the range of 0.2 to 10. 0mm, and more preferably, 0.3 to 6.0mm. When the wall thickness is less than 0.2mm, trapping efficiency lowers and causes PM leakage, and when it exceeds 10.0mm, it becomes difficult for the exhaust gas to pass through the wall part 33 and the pressure loss increases. The number of through holes 32 per unit sectional area (cell density) is preferably 0.16 to 62/cm$^2$ (1.0 to 400 cpsi), and more preferably 0.62 to 31/cm$^2$ (4 to 200 cpsi). When the number of through holes is less than 0.16/cm$^2$, the area of the wall to come into contact with the exhaust gas inside the honeycomb filter 30 becomes small, and when the number exceeds 62/cm$^2$, the pressure loss increases and manufacturing of the honeycomb filter 30 becomes difficult. The shape of the through holes 32 may be rectangular, triangular, or hexagonal.

The sheet-like member 31 of the honeycomb filter 30 is mainly made of inorganic fibers. The inorganic fibers may be, for example, metal fibers, ceramic fibers, and so on are available. Examples of metal fibers include fibers of one or more kinds selected among copper, iron (chromium-based stainless steel, chrome-nickel-based stainless steel, etc.), aluminum, and examples of ceramic fibers include fibers of one or more kinds selected among oxide-based fibers such as alumina, silica, silica-alumina, and potassium titanate, etc., nitride-based fibers of aluminum nitride, silicon nitride, boron nitride, and titanium nitride, etc., carbide-based fibers such as silicon carbide, etc. The length of the inorganic fibers is preferably 0.1 to 300$\mu$m, and more preferably 0.5 to 50$\mu$m. The diameter of the inorganic fibers is preferably 1 to 30$\mu$m, and more preferably 2 to 10$\mu$m. The sheet-like member 31 contains an inorganic binder that binds the inorganic fibers. The inorganic binder may be, for example, one or more kinds of binders selected among inorganic glass such as silicate glass, silicate alkali glass, and boron silicate glass, etc., and sol such as alumina sol, silica sol, and titania sol, etc. The content of the inorganic binder in the honeycomb filter 30 is preferably 5 to 50 weight percent as a solid content in the honeycomb filter 30, and more preferably 10 to 40 weight percent. When the content of the binder is less than 5 weight percent, the strength of the honeycomb filter 30 lowers, and when the content of the binder exceeds 50 weight percent, it is difficult to realize a high porosity.

Many inorganic fibers contained in the sheet-like member 31 are oriented along a plane perpendicular to the perforation direction of the through holes 32. Therefore, a space that PM contained in the exhaust gas enters and enables the exhaust gas to pass through from one side to the other side of the wall part 33 is easily formed, and the initial pressure loss can be reduced and PM contained in the exhaust gas can be made to enter the inside of the wall part 33 and be trapped.

The sheet-like member 31 may be formed to contain inorganic particles in addition to the inorganic fibers. The inorganic particles may be metal particles or ceramic particles, etc. Examples of metal particles include particles of one or more kinds selected among metal silicon, aluminum, iron (chromium-based stainless steel, chrome-nickel-based stainless steel, etc.,), and titanium. Examples of ceramic particles include particles of one or more kinds selected among oxide-based particles such as alumina, silica, silica-alumina, zirconia, cordierite, mullite, etc., nitride-based particles such as aluminum nitride, silicon nitride, boron nitride, titanium nitride, etc., carbide-based particles such as silicon carbide, zirconium carbide, titanium carbide, tantalum carbide, and tungsten carbide.

The honeycomb filter 30 supports LaCoO$_3$ having a perovskite structure as a first catalyst. The supporting amount of this first catalyst is 10 to 100 g/L as a weight of the first catalyst per unit volume of the honey comb filter 30.

The honeycomb filter 30 which supports the first catalyst may be prepared by supporting the first catalyst in inorganic fibers as a raw material, or may be prepared by supporting the first catalyst on the sheet-like members 31 and the end portion sheet-like members 34, or the first catalyst may be supported after the honeycomb filter 30 is prepared.

Herein, the honeycomb filter 30 may be prepared by laminating sheet-like members 31 mainly made of inorganic foams in place of the sheet-like members 31 containing inorganic fibers. The inorganic foams may be, for example, ceramic foams or metal foams, and metal foams are preferable since they have high strength. Examples of ceramic foams include foams of one or more kinds selected among alumina foam, silica foam, and silicon carbide foam, and examples of metal foams include foams of one or more kinds selected among copper, iron (stainless steel, etc.), and aluminum. The porosity of the honeycomb filter 30 made of the inorganic foams is preferably 75 to 95% (more preferably, 80 to 95%).

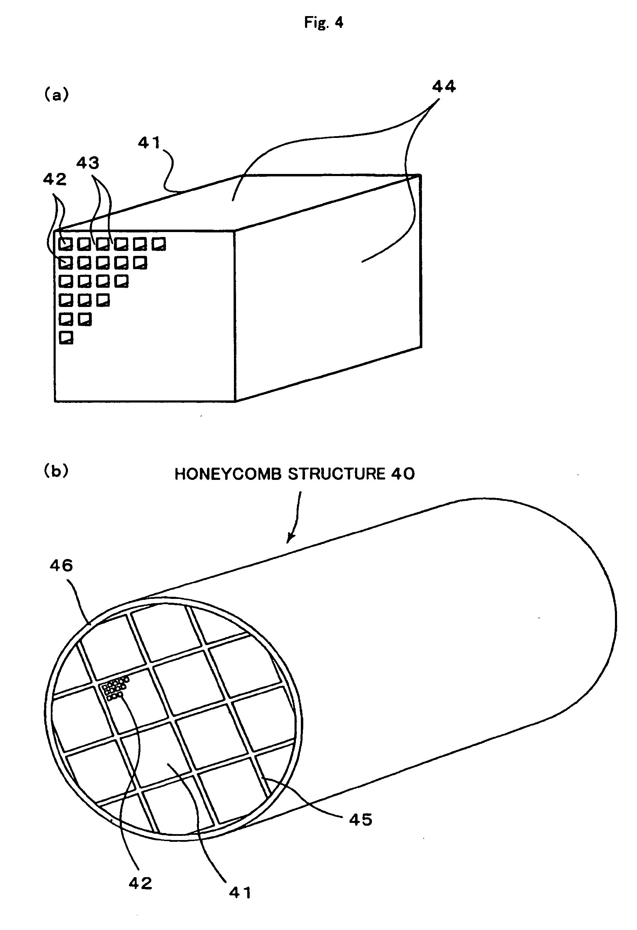

Next, the construction of the honeycomb structure 40 is described with reference to FIG. 4. The honeycomb structure 40 is constructed as a NOx storage catalyst (hereinafter, referred to as NSC) that stores NOx contained in the exhaust gas of the engine 20 and converts it. FIG. 4 is an explanatory view of the honeycomb structure 40, wherein (a) is a perspective view of a porous honeycomb unit 41, and (b) is a perspective view of the honeycomb structure 40. This honeycomb structure 40 is formed by preparing porous honeycomb units 41 having a plurality of through holes 42 and joining the two or more porous honeycomb units 41 via a sealing material layer 45 on their outer faces 44 on which the through holes 42 do not open. The porous honeycomb unit 41 contains ceramic particles, inorganic fibers, and an inorganic binder. As shown in FIG. 4(b), the honeycomb structure 40 has a coating material layer 46 that coats the outer circumferential faces, on which the through holes 42 do not open, of the two or more porous honeycomb units 41 joined by the sealing material layer 45.

The porous honeycomb unit 41 is formed to have a square section on a plane orthogonal to the through holes 42, and the honeycomb structure 40 formed by joining the plurality of porous honeycomb units 41 are formed to have a cylindrical external shape. The porous honeycomb unit 41 may be shaped to have, for example, a rectangular, hexagonal, or fan-shaped section orthogonal to the through holes 42, and the honeycomb structure 40 may be shaped to have, for example, a rectangular pillar section or an oval pillar section on the plane orthogonal to the through holes 42.

The through holes 42 formed in the porous honeycomb unit 41 are formed to be square in section. The section of the through hole 42 maybe triangular or hexagonal. The wall thickness between the through holes 12 is preferably in the range of 0.05 to 0.35mm, more preferably 0.10 to 0.30mm, and most preferably 0.15 to 0.25mm. When the wall thickness is less than 0.05mm, the strength of the porous honeycomb unit 41 lowers, and when it exceeds 0.35mm, the area in contact with the exhaust gas becomes small and the catalyst performance may lower. The number of through holes per unit sectional area is preferably 15.5 to 186/cm$^2$ (100 to 1200 cpsi), more preferably 46.5 to 170.5/cm$^2$ (300 to 1100 cpsi), and most preferably 62.0 to 155/cm$^2$ (400 to 1000 cpsi). When the number of through holes is less than 15.5/cm$^2$, the area of the wall to come into contact with the exhaust gas inside the porous honeycomb unit becomes small, and if it exceeds 186/cm$^2$, the pressure loss becomes high and manufacturing of the porous honeycomb unit becomes difficult.

The sectional area of the porous honeycomb unit 41 is preferably 5 to 50cm$^2$, more preferably 6 to 40cm$^2$, and most preferably 8 to 30cm$^2$. In this range, the specific surface area per unit volume of the honeycomb structure 40 can be kept large, and it becomes possible to highly disperse the second catalyst. And even when an external force such as thermal shock or vibration is applied, the shape as the honeycomb structure can be maintained. The percentage of the total sectional area of the porous honeycomb unit 41 to the sectional area of the honeycomb structure 40 is preferably 85% or more. When this percentage is less than 85%, this is not preferable since the specific surface area to support the second catalyst becomes relatively small and the pressure loss becomes high.

In the porous honeycomb unit 41, alumina particles are used as ceramic particles, silica alumina fibers are used as inorganic fibers, and silica sol is used as an inorganic binder. These ceramic particles, inorganic fibers, and inorganic binder may be selected among those described in the honeycomb filter 30. Although the porous honeycomb unit 41 can be prepared without using the inorganic binder, sufficient strength is obtained even at a low firing temperature by using the inorganic binder.

The content of the ceramic particles in the porous honeycomb unit 41 is preferably 30 to 97 weight percent, more preferably 30 to 90 weight percent, still more preferably 40 to 80 weight percent, and most preferably 50 to 75 weight percent. When the content of the ceramic particles is less than 30 weight percent, the amount of ceramic particles to contribute to improvement in specific surface area becomes relatively small, so that the specific surface area as the honeycomb structure becomes small and it becomes impossible to highly disperse the catalyst that converts the exhaust gas when supporting the catalyst, and when the content of the ceramic particles exceeds 90 weight percent, the contents of inorganic fibers and inorganic binder to contribute to improvement in strength become relatively small, resulting in lowering in strength of the honeycomb structure.

The content of the inorganic fibers in the porous honeycomb unit 41 is preferably 3 to 70 weight percent, more preferably 3 to 50 weight percent, still more preferably 5 to 40 weight percent, and most preferably 8 to 30 weight percent. When the content of the inorganic fibers is less than 3 weight percent, the strength of the honeycomb structure lowers, and when the content of the inorganic fibers exceeds 70 weight percent, the amount of the ceramic particles to contribute to improvement in specific surface area becomes relatively small, so that the specific surface area as the honeycomb structure becomes small and it becomes impossible to highly disperse the catalyst for exhaust gas conversion when supporting the catalyst. The average of the aspect ratios of the inorganic fibers is preferably 2 to 1000, more preferably 5 to 800, and most preferably 10 to 500. When the aspect ratio of the inorganic fibers is less than 2, the strength of the honeycomb structure may lower, and when the aspect ratio exceeds 1000, the forming mold is clogged in the course of molding and the moldability may be deteriorated.

The content of the inorganic binder in the porous honeycomb unit 41 is preferably 50 weight percent or less as a solid content in the porous honeycomb unit 41, more preferably 5 to 50 weight percent, still more preferably 10 to 40 weight percent, and most preferably 15 to 35 weight percent. When the content of the inorganic binder exceeds 50 weight percent, the moldability is deteriorated.

In the honeycomb structure 40, platinum as an oxidation catalyst and barium as an NOx storage agent are supported as the second catalyst. As the supporting amount of the second catalyst, platinum is supported by preferably 1 to 5g/L and barium is supported by preferably 0.1 to 1 mol/L in weight of the second catalyst per unit volume of the honeycomb structure 40.

Herein, the honeycomb structure 40 contains ceramic particles and inorganic fibers, however, it is also possible that it contains ceramic particles with a predetermined particle diameter and ceramic particles with a particle diameter larger than the predetermined particle diameter. Further, the honeycomb structure may contain an inorganic binder. In this case, the catalyst is also highly dispersed and strength against thermal shock and vibration can be increased. The ceramic particles and inorganic binder used in the honeycomb structure 40 may be selected among those described above. In this case, ceramic particles with the larger particle diameter preferably have a particle diameter of 5 times or more of the predetermined particle diameter, and more preferably 10 to 30 times of the predetermined particle diameter. The particle diameter of the ceramic particles with the larger particle diameter is preferably 10 to 60$\mu$m, and more preferably 20 to 50$\mu$m. When the particle diameter is less than 10$\mu$m, the strength of the honeycomb structure 40 cannot be sufficiently increased, and when the particle diameter exceeds 60$\mu$m, the forming mold is easily clogged in the course of molding and moldability is deteriorated. When the particle diameter exceeds 60$\mu$m, the contact points of particles are reduced and the strength of the honeycomb structure 40 may become low. Herein, particles with the predetermined particle diameter and particles with particle diameters larger than the predetermined particles are distributed, the average of these particle diameters may be used. As ceramic particles with particle diameters larger than the predetermined particle diameter, a different kind from the ceramic particles with the predetermined particle diameter may be selected, or ceramic particles that are the same kind as the ceramic particles with the predetermined particle diameter and have different shapes or different physical properties (for example, the crystal form is different and the melting temperature is different) may be selected.

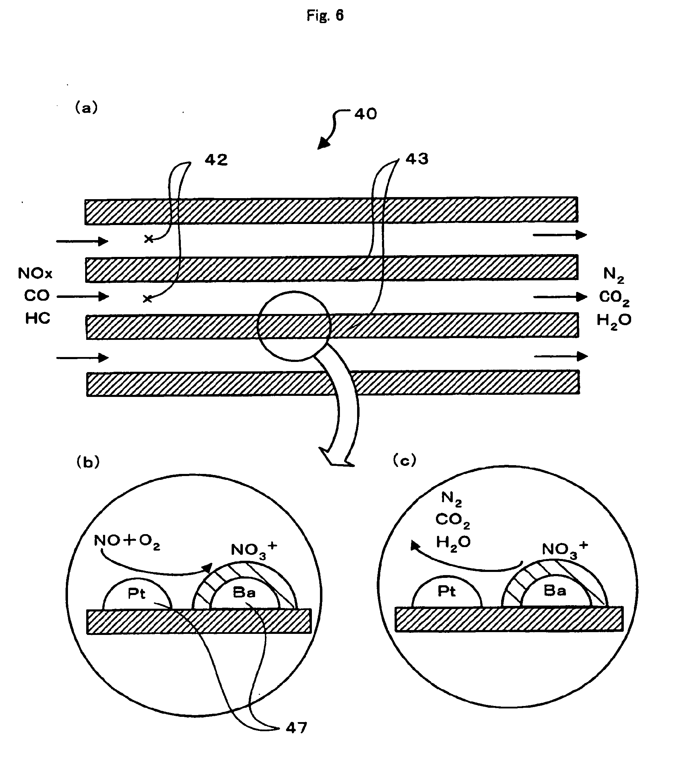

Next, action of the exhaust gas cleanup system 10 of this embodiment is described with reference to FIG. 5 and FIG. 6. FIG. 5 is a schematic view of purification of PM by the honeycomb filter 30, and FIG. 6 is a schematic view of conversion of harmful substances contained in the exhaust gas by the honeycomb structure 40, wherein (a) is a schematic view of the honeycomb structure 40, (b) is a schematic view when storing NOx, and (c) is a schematic view when discharging NOx. First, the engine 20 is started. Then, the engine 20 burns a fuel by injecting it into air compressed by a piston to generate a driving force. At this point, an exhaust gas containing PM, NOx, HC, and CO is exhausted to the manifold 22 from the engine 20 and flows into the honeycomb filter 30. In the wall part 33 of the honeycomb filter 30, a space which PM enters is formed, and PM contained in the exhaust gas is made to enter the inside of the wall 33 supporting a catalyst 37 for exhaust gas purification and is trapped. Herein, when many inorganic fibers 35 contained in the honeycomb filter 30 are oriented along the surface perpendicular to the perforation direction of the through holes 32, it is thought that PM enters the deeper inside of the wall part 33 and is trapped. The honeycomb filter 30 is disposed at a position of 1m from the engine 20, and the exhaust gas reaches the honeycomb filter 30 while keeping a high temperature without great heat removal by the exhaust path (for example, exhaust pipe, etc.). As a result, the first catalyst supported on the honeycomb filter 30 is quickly raised in temperature by the exhaust gas to a temperature that makes the catalyst sufficiently perform the catalyst function, in particular, a temperature that easily burns PM (for example, 400°C or more). Particularly, the honeycomb filter 30 has a high porosity of 80% or more and a small heat capacity, so that it is quickly raised in temperature by the exhaust gas. In this case, when PM comes into contact with the catalyst 37 supported inside the wall part 33 of the honeycomb filter 30, the PM is quickly burned. As a result, PM hardly deposits on the honeycomb filter 30, and the frequency of forcibly regenerating (injecting an excessive amount of fuel) is reduced. Most of PM is converted into carbon dioxide ($CO_2$) due to PM burning, however, CO may be produced due to partial imperfect combustion.

The exhaust gas from which PM has been removed by the honeycomb filter 30 flows into the honeycomb structure 40 disposed on the downstream of the honeycomb filter 30 (see FIG. 6). In this exhaust gas, NOx (mainly NO), HC, and CO are contained. This CO also contains substances produced due to imperfect combustion of PM. The honeycomb structure 40 is disposed at a position of 3m from the engine 20, and the exhaust gas reaches the honeycomb structure 40 without great heat removal by the exhaust path (such as the exhaust pipe 24), so that the second catalyst supported by the honeycomb structure 40 is raised in temperature by the exhaust gas to a temperature that makes the catalyst perform the catalyst function (for example, 200°C or more). Then, when the air-fuel ratio is lean, NOx contained in the exhaust gas is stored in the form of $NO^{3+}$ in the NOx storage agent (barium) (FIG. 6(b)). On the other hand, when the air-fuel ratio is rich, under the presence of stored $NO^{3+}$, the oxidation catalyst (platinum) cleans and converts HC and CO into nitrogen ($N_2$), water ($H_2O$), and carbon dioxide ($CO_2$) (FIG. 6(c)). Thus, harmful substances (NOx, HC, CO, etc.) contained in the exhaust gas and harmful substances (CO, etc.) produced by burning particulate materials trapped by the honeycomb filter 30 are converted.

Next, examples of methods of manufacturing honeycomb filters 30 using inorganic fibers, ceramic foams, and metal foams, respectively, and a method for manufacturing a honeycomb structure 40 using ceramic particles, inorganic fibers, and inorganic binders are described below.

1. Method for manufacturing honeycomb filter 30

(1) An example of a method for manufacturing a honeycomb filter 30 by using inorganic fibers is described. Inorganic fibers (alumina fibers or the like) are dispersed in a proportion of 5g to 100g to 1 L of water, an inorganic binder (silica sol or the like) is added in a proportion of 10 to 40 parts by weight and an organic binder (acryl resin or the like) is added in a proportion of 1 to 10 parts by weight to 100 parts by weight of the inorganic fibers, and furthermore, as appropriate, small amounts of a coagulant such as aluminum sulfate and a flocculant such as polyacrylamide are added, and these are sufficiently stirred to prepare a papermaking slurry. The papermaking slurry is screened through a perforated mesh so as to have holes of a predetermined shape (square, etc.) at predetermined intervals, and the obtained article is dried at 100 to 200°C, whereby the sheet-like member 31 shown in FIG. 2(c) is obtained. The sheet-like member 31 including inorganic fibers is elastically deformable when a pressure is applied thereto, so that its porosity and thickness are adjusted by compressing the sheet-likemember as appropriate. Herein, for example, when a honeycomb filter 30 is integrally molded by means of extrusion molding by using a mold, many inorganic fibers are oriented in the extrusion direction (perforation direction of the through holes 32), however, when it is manufactured by this papermaking process, as shown in FIG. 2, a larger amount of inorganic fibers are oriented along a plane perpendicular to the perforation direction of the through holes 32. Therefore, a space which PM enters and enables the exhaust gas to flow from one side to the other side of the wall part 33 is easily formed inside the wall part 33 in the orientation direction of the inorganic fibers, and it becomes easy for the exhaust gas to pass through the wall part 33. Next, the end portion sheet-like members 34 are prepared by forming holes with a predetermined shape in a metal plate so that both ends of the through holes 32 are alternately clogged (see FIG. 2(b)).

Subsequently, the first catalyst is supported on the sheet-like members 31. First, a solution (for example, slurry or sol) containing the first catalyst is prepared, and the sheet-like members 31 are soaked in this solution and then taken out, and extra solution remaining in the through holes 32 or the like is removed by being suctioned. Then, drying is performed at 80 to 200°C and firing is performed at 500 to 700°C, whereby sheet-like members 31 supporting the first catalyst can be obtained. The solution containing the first catalyst may be a slurry of the catalyst for exhaust gas purification, or may be a slurry of oxide (alumina or the like) supporting the first catalyst. The kinds and combination of the first catalyst are properly selected according to the purpose of use, and as the supporting amount of the first catalyst, an amount that can sufficiently purify the exhaust gas is properly selected according to the selected catalyst kinds and combination. Last, a honeycomb filter 30 is prepared by physically laminating the sheet-like members 31 and end portion sheet-like members 34. As shown in FIG. 3, several end portion sheet-like members 34 are laminated and inserted into a metal-made first casing 38 so that communicating holes 36 are formed by communicating the through holes 32, and then a predetermined number (for example, 10 to 200) of the sheet-like members 31 are laminated and inserted in the same manner, and furthermore, a pressure is applied by a press in the direction of insertion and lamination of the several end portion sheet-like members 34 to pressure-bond the laminated end portion sheet-like members 34 and sheet-like members 31, and a presser fitting is set and fixed, whereby the honeycomb filter 30 is obtained. The laminated end portion sheet-like members 34 may be bonded and fixed to each other by using an adhesive. For convenience of explanation, the first casing 38 of FIG. 3 is shown at only the lower portion of the upper and lower portions obtained by cutting the hollow columnar first casing 38.

(2) Next, an example of a method for manufacturing the honeycomb filter 30 by using ceramic foams is described. Through holes 32 are formed by cutting in a high-porosity ceramic foam plate (for example, ceramic foam made by Bridgestone) mainly made of a ceramic material (for example, cordierite, alumina, mullite, silicon carbide, and aluminum titanate, etc.), whereby the sheet - like member 31 described in (1) given above is obtained. The first catalyst is supported onto the obtained plurality of sheet-like members 31 by the method described in (1) given above, and the sheet-like members are laminated by the method described in (1) given above, whereby a honeycomb filter 30 is obtained. As the end portion sheet-like member 34, one made of metal, described in (1) given above, is used.

(3) Next, an example of the method for manufacturing a honeycomb filter 30 by using metal foam is described.

Through holes 32 are formed by means of laser machining in a high-porosity metal plate (for example, Celmet made by Sumitomo Electric Industries, Ltd.), whereby a sheet-like member 31 shaped as described in (1) given above is obtained. Then, the first catalyst is supported onto the obtained plurality of sheet-like members 31 by the method described in (1) given above, and the sheet-like members are laminated by the method described in (1) given above to manufacture a honeycomb filter 30. The sheet-like members 31 formed of metal foams are deformable by being applied with a pressure, so that the porosity and thickness are adjusted by compressing the sheet-like members as appropriate. The end portion sheet-like members 34 are made of metal as described in (1) given above.

2. Method for manufacturing honeycomb structure 40

Next, an example of the manufacturing method for the honeycomb structure 40 of the invention described above is explained. First, alumina particles as ceramic particles, silica-alumina fibers as inorganic fibers and silica sol as an inorganic binder are mixed to prepare a raw material paste. An organic binder, a dispersion medium, and a molding aid may be added as appropriate to the raw material paste according to the moldability. As the organic binder, for example, one or more organic binders selected among methylcellulose, carboxymethylcellulose, hydroxyethylcellulose, polyethylene glycol, phenol resin, and epoxy resin may be used. The blending amount of the organic binder is preferably 1 to 10 weight percent to a total of 100 parts by weight of the alumina particles, silica-alumina fibers, and silica sol. As the dispersion medium, for example, water, an organic solvent (benzene, etc.), alcohol (methanol, etc.), and so on may be used. As the molding aid, for example, ethylene glycol, dextrin, fatty acid, fatty acid soap, and polyalcohol, etc., may be used. A mixer or attriter may be used for mixing the raw materials, or the raw materials are sufficiently kneaded by a kneader. As a method for molding the raw material paste, a shape having through holes is molded by means of, for example, extrusion molding.

The obtained molding is dried. As the drying machine, for example, a microwave dryer or hot air dryer is used. When an organic binder and the like are added, degreasing is preferably performed. The degreasing conditions are properly selected depending on the kinds and amounts of the organic materials contained in the molding, and are preferably almost 400°C and 2 hours. Next, the dried and degreased molding is fired at 600 to 1000°C. When the firing temperature is less than 600°C, sintering of the ceramic particles, etc., is not advanced and the strength as a honeycomb structure lowers, and when the firing temperature exceeds 1000°C, sintering of ceramic particles, etc., is excessively advanced and the specific surface area per unit volume becomes small, and the catalyst for exhaust gas conversion to be supported cannot be sufficiently highly dispersed. Through these processes, a porous honeycomb unit 41 having a plurality of through holes is obtained.

Next, a sealing material paste to become a sealing material layer is applied to the obtained porous honeycomb units 41 and the porous honeycomb units 41 are successively joined to each other, and then dried and solidified to prepare a honeycomb unit joined body. As a sealing material, for example, an inorganic binder mixed with ceramic particles, an inorganic binder mixed with inorganic fibers, an inorganic binder mixed with ceramic particles and inorganic fibers, or the like may be used. An organic binder is allowed to be added to these sealing materials. As the organic binder, for example, one or more organic binders selected among polyvinyl alcohol, methylcellulose, ethylcellulose, carboxymethylcellulose, and so on may be used. The thickness of the sealing material layer that joins the porous honeycomb units is preferably 0.5 to 2mm. When the thickness of the sealing material layer is less than 0.5mm, sufficient joint strength cannot be obtained, and this is not preferable. When the thickness exceeds 2mm, the specific surface area per unit volume of the honeycomb structure lowers, and this is not preferable. The reason for this is that the sealing material layer is a portion that does not function as a catalyst support. In addition, when the thickness of the sealing material layer exceeds 2mm, the pressure loss increases. The number of porous honeycomb units to be joined to each other is properly determined according to the size of the honeycomb structure to be used. Next, the honeycomb unit joined body is properly cut and ground to the size of the honeycomb structure, and a coating material is applied to the outer circumferential face (side face) in which no through hole is open and then dried and solidified to form a coating material layer. The outer circumferential face is thus protected and the strength is increased. The coating material may have the same composition and blending proportions as those of the sealing material, or may have different composition and blending proportions. The thickness of the coating material layer is preferably 0.1 to 2mm. Then, the joined body thus obtained is calcined to form a honeycomb support (a honeycomb structure before supporting the catalyst). The calcining conditions may be properly determined depending on the kinds and amounts of containing organic materials, and are preferably set to almost 700°C and 2 hours.

Subsequently, the second catalyst is supported on the obtained honeycomb support. Herein, platinum as an oxidation catalyst and barium as an NOx storage agent are supported. First, a solution (for example, slurry or sol) containing the second catalyst is prepared, and the honeycomb support is soaked in this solution and then taken out, and extra solution remaining in the through holes 42 or the like is removed by being suctioned. Then, the honeycomb support is dried at 80 to 200°C and fired at 500 to 700°C, whereby a honeycomb structure 40 supporting the second catalyst is obtained. The solution containing the second catalyst may be a slurry of the second catalyst or a slurry of oxide (alumina, etc.) supporting the second catalyst. When several kinds of second catalysts are supported, the process of soaking the honeycomb support in a solution of the second catalysts and firing it may be repeated for each second catalyst. The supporting amount of the second catalysts is properly selected depending on its kinds and combination. The second catalyst may be supported after forming a honeycomb support, or may be supported at the stage of ceramic particles of the raw material.

In the exhaust gas cleanup system 10 of this embodiment described above, the first catalyst 37 supported by the honeycomb filter 30 is quickly raised in temperature by the exhaust gas and starts sufficiently performing the catalyst function, and in addition, the porosity of 75% or more allows easy contact with PM, so that a greater amount of PM can be efficiently burned. Therefore, the honeycomb filter 30 can easily be regenerated. In addition, in comparison with the case where PM is trapped only in the wall surface supporting the catalyst, PM is trapped inside the wall part 33 supporting the first catalyst in the structure described above, so that the probability of contact between PM and the first catalyst 37 is increased and PM burning efficiency is increased. Furthermore, even when a heat stress is applied due to a temperature difference in the longitudinal direction of the honeycomb filter 30 caused by PM burning heat, the stress can be reduced between the laminated sheet-like members 32, so that damage due to the heat stress is less likely to occur than in the case of integral molding in the longitudinal direction. The honeycomb filter 30 has a high porosity and a small heat capacity, so it quickly rises in temperature and enables PM to be burned. In addition, the first catalyst 37 supported by the honeycomb filter 30 is an oxide having a perovskite structure, so PM can be burned while the use amount of precious metals (platinum and the like) as precious elements is reduced.

The honeycomb structure 40 is disposed at a position of an exhaust path length of 3m or less from the engine 20, so that the exhaust gas reaches the honeycomb structure 40 without great heat removal by the exhaust pipe 24 or the like, and therefore, the second catalyst supported in the honeycomb structure 40 is made to function by using the heat of the exhaust gas and a plurality of harmful substances contained in the exhaust gas are easily converted. Furthermore, the honeycomb structure 40 is structured by joining a plurality of porous honeycomb units 41 via sealing material layer 45, so that the honeycomb structure highly disperses the catalyst and has high strength against thermal shock and vibrations.

Furthermore, in the exhaust gas cleanup system 10, CO produced due to imperfect combustion of PM at the honeycomb filter 30 disposed on the upstream side is also converted by the honeycomb structure 40 disposed on the downstream side, so that it is not necessary to further dispose a catalyst support or the like that converts harmful substances on the downstream of the honeycomb structure 40.

The invention is not limited to the embodiments described above, and the invention can be carried out in various modes as long as the modes are within the technical scope of the invention.

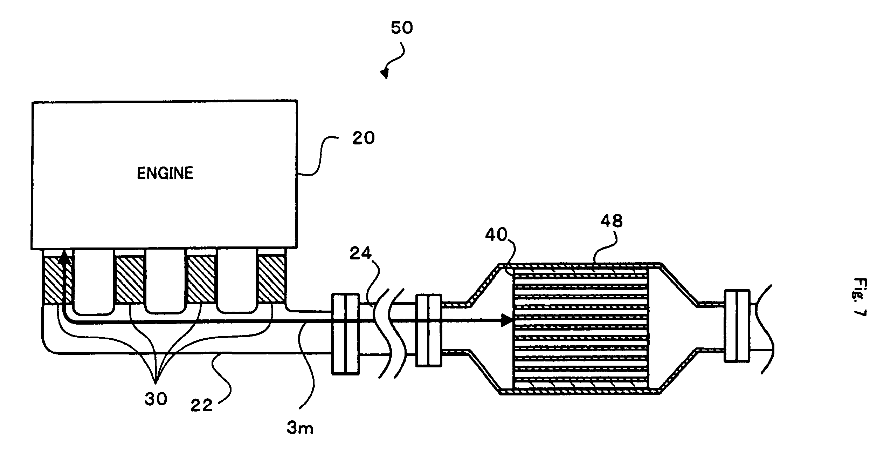

For example, in the above-described embodiments, the exhaust gas cleanup system 10 includes a first casing 38 retaining the honeycomb filter 30 connected to the manifold 22, however, as shown in FIG. 7, the exhaust gas cleanup system 50 including a honeycomb filter 30 disposed inside the manifold 22 is also possible.

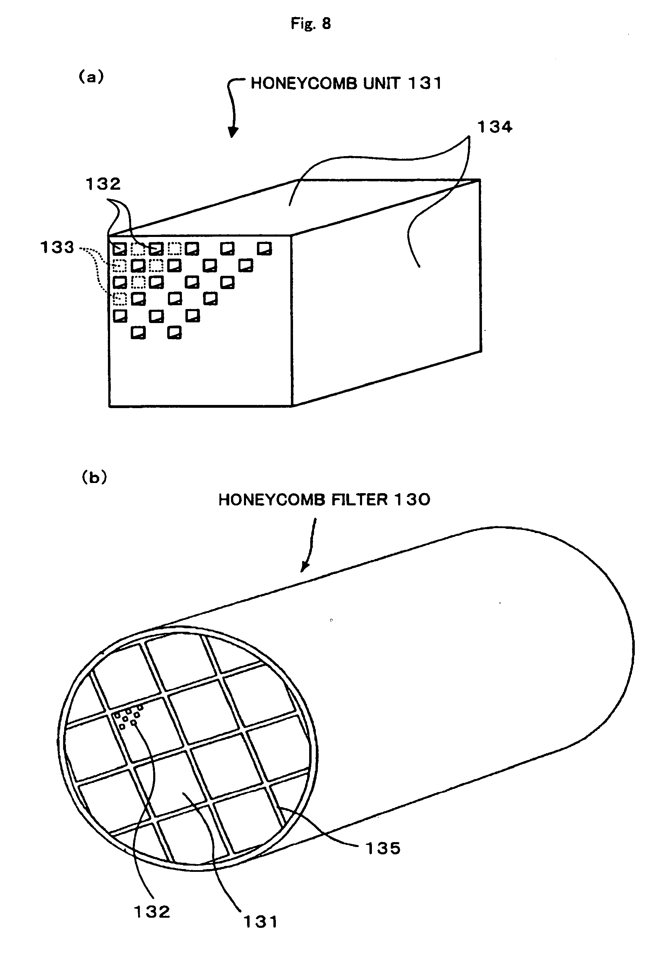

In the above-described embodiment, the honeycomb filter 30 is formed by laminating, in the longitudinal direction, two or more disk-shaped sheet-like members 31 having a plurality of through holes 32 so that the through holes 32 communicate with each other. It is also possible, as one modified structure, that the honeycomb filter is molded into a cylindrical shape having through holes by means of integral molding and the end faces of the through holes are alternately clogged. In addition, as shown in FIG. 8, the honeycomb filter 130 may be formed by molding rectangular pillar-shaped honeycomb units 131 having through holes 132, alternately clogging the end faces of the through holes 132 by clogging portions 133, joining the outer faces 134 by a sealing material layer 135, and machining the external form into a columnar shape.

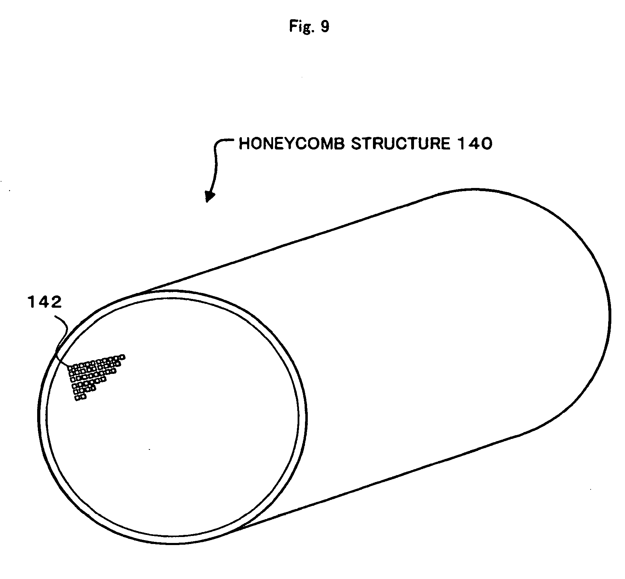

In the above-described embodiments, the honeycomb structure 40 is formed by joining two or more porous honeycomb units 41 having a plurality of through holes 42 on their outer faces 44 by the sealing material layer 45. It is also possible, as one modified structure, that the honeycomb structure 140 is integrally molded into a cylindrical shape having through holes 142, as shown in FIG. 9. It is also possible that the honeycomb structure is formed by laminating, in the longitudinal direction, two or more disk-shaped sheet-like members having a plurality of through holes so that the through holes communicate with each other. In these cases, a plurality of harmful substances can also be converted by the honeycomb structure.

In the above-described embodiment, the exhaust gas cleanup system 10 is loaded in an automobile. The exhaust gas cleanup system may be loaded in, for example, a train, a vessel, or an aircraft, etc., or applied to a generator using the engine 20.

Examples

[Example 1]

Hereinafter, an example (example 1) of an exhaust gas cleanup system 10 using the honeycomb filter 30 and the honeycomb structure 40 is described.

· Method for manufacturing a honeycomb filter 30 (DPF-A)

A honeycomb filter 30 that contains alumina fibers (average diameter: $5\mu$m, average length: $300\mu$m) as inorganic fibers was manufactured. Alumina fibers were dispersed in the proportion of 10g to 1 L of water, silica sol was added in the proportion of 5 weight percent to alumina fibers, an acryl resin was added in the proportion of 3 weight percent, and furthermore, small amounts of aluminum sulfate and polyacrylamide were added and sufficiently stirred, whereby a papermaking slurry was prepared. This papermaking slurry was screened through a perforated mesh having square holes formed at predetermined intervals, and then the obtained article was dried at 150°C, whereby a sheet-like member 31 was obtained which had a diameter of 143.8mm, a thickness of 1mm, through holes with a size of a 4.5mm square, a thickness of the wall part 33 of 2mm, and a cell density of $2.4/cm^2$ (15.2 cpsi). In addition, an end portion sheet-like member 34 was manufactured by perforating through holes 32 in a metal plate made of nickel-chromium-based stainless steel with a diameter of 143.8mm and a thickness of 1.0mm so that both ends of the through holes 32 were alternately clogged.

Next, 0.01 moles of $La(NO_3)_3 \cdot 6H_2O$, 0.01 moles of $Co(OCOCH_3)_2 \cdot 4H_2O$, and 0.024 moles of $C_6H_8O_7 \cdot H_2O$ (citric acid) were mixed and stirred in 20ml of ethanol solvent to prepare $LaCoO_3$ precursor sol. The sheet-like member 31 was soaked in this sol and taken out, and then extra sol was removed by being suctioned, and the member was dried at 100°C and fired for 1 hour at 600°C. This supporting amount of the catalyst for exhaust gas purification was 30g/L in terms of the weight of the catalyst for exhaust gas purification per unit volume of the honeycomb filter 30 (72g in terms of the weight of $LaCoO_3$ with respect to the honeycomb filter). The supporting amount of the catalyst for exhaust gas purification was confirmed based on a weight increase of the honeycomb filter. The perovskite structure of $LaCoO_3$ was confirmed by means of X-ray diffraction measurement.

Next, three end portion sheet-like members 34 were laminated and inserted into a metal casing 38 so that the through holes 32 communicated with each other, and then 150 sheet-like members 31 were laminated and inserted in the same manner, and the three end portion sheet-like members 34 were pressure-bonded by applying a pressure in their insertion and lamination direction by a press and fixed by setting a presser fitting, whereby the honeycomb filter 30 shown in FIG. 3 was obtained (DPF-A). The porosity of the obtained honeycomb filter 30 (DPF-A) was 80%. The porosity was calculated by using the formula 1 described below. The structure, the main components, and various values such as the platinum supporting amount, the porosity, the unit area ratio (the percentage of the total sectional area of the porous honeycomb units to the sectional area of the honeycomb structure), and so on of this DPF-A are shown in Table 1. In this Table 1, the details of DPF-B and DPF-C and NSC-D through F described later are also shown.

Table 1

| Sample[1] | Structure | Main component | Catalyst supporting Amount | | Porosity | Unit Area Ratio |
|---|---|---|---|---|---|---|
| | | | Pt | $LaCoO_3$ | | |
| | | | (g) | (g) | (%) | (%) |
| DPF-A | Laminated | Alumina fibers | 0 | 72 | 80 | -- |
| DPF-B | Joined | Silicon carbide particles | 0 | 72 | 60 | 93.5 |
| DPF-C | Joined | Silicon carbide particles | 4.8 | 0 | 60 | 93.5 |
| NSC-D | Joined | Alumina particles | 4.8 | 0 | 60 | 93.5 |
| NSC-E | Integral | Cordierite | 12 | 0 | | -- |
| NSC-F | Integral | Cordierite | 4.8 | 0 | | -- |

1) 143.8 mm in diameter $\times$ 150 mm in length

· Method for manufacturing honeycomb structure 40 (NSC-D)

First, 40 weight percent of $\gamma$ alumina particles (average particle diameter: $2\mu$m), 10 weight percent of silica-alumina fibers (average fiber diameter: $10\mu$m, average fiber length: $100\mu$m, aspect ratio: 10), and 50 weight percent of silica sol (solid concentration: 30 weight percent) were mixed, and to 100 parts by weight of the obtained mixture, 6 parts by weight of methylcellulose as an organic binder and small amounts of a plasticizer and a lubricant were added, mixed, and kneaded, whereby a mixed composition was obtained. Next, this mixed composition was extruded, by an extruder, into a rectangular column shape with a plurality of through holes arranged in the longitudinal direction, whereby a raw molding was obtained. Then, the raw molding was sufficiently dried by using a microwave dryer and a hot air dryer, and left at 400°C for 2 hours and degreased. Thereafter, the molding was left at 800°C for 2 hours and fired, whereby a porous honeycomb unit 41 was obtained which had a rectangular column shape (34.3mm×34.3mm×150mm), a cell density of 93/cm$^2$ (600 cpsi), a wall thickness of 0.2mm, and a quadrilateral (square) cell shape. Next, 29 weight percent of $\gamma$ alumina particles (average particle diameter: 2$\mu$m) , 7 weight percent of silica-alumina fibers (average fiber diameter : 10$\mu$m, average fiber length: 100$\mu$m), 34 weight percent of silica sol (solid concentration: 30 weight percent), 5 weight percent of carboxymethylcellulose and 25 weight percent of water were mixed to prepare sealing material paste. This sealing material paste was applied so as to be a thickness of 1mm on the outer faces 13 of the porous honeycomb units to join the porous honeycomb units 41, whereby a joined body was obtained. Then, the joined body was cut by using a diamond cutter into a cylindrical shape so that the front face of the joined body became roughly symmetrical about a point, and the sealing material paste was applied so as to be a 0.5mm thickness on the circular outer surface that had no through holes to coat the outer surfaces. Thereafter, the joined body was dried at 120°C, and left at 700°C for 2 hours and the sealingmaterial layer and the coating material layer were degreased, whereby a honeycomb support having a cylindrical shape (143.8mm$\phi$ in diameter × 150mm in height) was obtained.

Barium and platinum were supported on the obtained honeycomb support. First, a 0.5 mol/L solution of barium nitrate was prepared. Next, this barium nitrate solution was absorbed in the honeycomb structure so that the barium supporting amount became 0.3 mol/L in terms of the number of moles of barium per unit volume of the honeycomb structure, dried at 250°C for 15 minutes, and fired at 500°C for 30 minutes. Next, a 0.25 mol/L solution of platinum nitrate was prepared. This platinum nitrate solution was absorbed in the honeycomb structure so that the platinum supporting amount became 2.0 g/L in terms of the weight of platinum per unit volume of the honeycomb structure (4.8g in terms of the weight of platinum with respect to the honeycomb structure), and fired at 600°C for 1 hour. Thereby, a honeycomb structure 40 (NSC-D) as the NOx storage catalyst shown in FIG. 4 was obtained. The porosity of the obtained honeycomb structure 40 (NSC-D) was 60%, the specific surface area per unit volume of the honeycomb structure 40 (NSC-D) was 39270 m$^2$/L, and the unit area ratio was 93.5%. The specific surface area per unit volume was calculated by using the formula 2 described later.

Subsequently, the DPF-A was disposed at the position of a length of 1m from the engine 20 (the length of the exhaust path from the extreme upstream portion of the manifold 22 to the front end of the DPF-A, the same applies to the description below) and the NSC-D was disposed at the position of a length of 3m from the engine 20. This was defined as example 1. The engine 20 was a 2.0L diesel engine. The length of the DPF and NSC from the engine 20 in this example 1 and their platinum supporting amounts are shown in Table 2. Descriptions concerning examples 2 through 11 are also shown in Table 2. In addition, the conversion/purification rates of CO, HC, NOx, and PM described later, the regenerating rate of PM, the maximum temperature of the DPF during 10-15 mode measurement, and the time until the DPF reaches the maximum temperature after the exhaust gas reaches its maximum temperature are also shown in Table 2.

Table 2

| | Upstream side[1] conversion apparatus | Distance[2] (m) | Pt Amount (g) | LaCoO$_3$ Amount (g) | Downtream purification/ apparatus | Distance[2] (m) | Pt Amount (g) | LaCoO$_3$ Amount (g) | Conversion/ purification Rate (%) CO | HC | NOx | PM | Regenerating Rate (%) | Maximum [3] Temperature (°C) | Time[4] (s) |
|---|---|---|---|---|---|---|---|---|---|---|---|---|---|---|---|
| Example 1 | DPF-A | 1 | 0 | 72 | NSC-D | 3 | 4.8 | 0 | 98 | 95 | 91 | 100 | 75 | 430 | 10 |
| Example 2 | DPF-B | 1 | 0 | 72 | NSC-E | 3 | 12 | 0 | 96 | 92 | 90 | 100 | 51 | 410 | 25 |
| Example 3 | DPF-A | 1 | 0 | 72 | NSC-D | 1.2 | 4.8 | 0 | 98 | 95 | 92 | 100 | 75 | 430 | 10 |
| Examples 4 | DPF-A | 1 | 0 | 72 | NSC-F | 3 | 4.8 | 0 | 68 | 56 | 78 | 100 | 75 | 430 | 10 |
| Example 5 | DPF-B | 1 | 0 | 72 | NSC-F | 3 | 4.8 | 0 | 68 | 60 | 76 | 100 | 51 | 410 | 25 |
| Example 6 | NSC-D | 3 | 4.8 | 0 | DPF-A | 3.2 | 0 | 72 | 78 | 95 | 88 | 100 | 40 | 380 | 20 |
| Example 7 | NSC-D | 3 | 4.8 | 0 | DPF-C | 3.2 | 4.8 | 0 | 84 | 95 | 86 | 100 | 20 | 360 | 35 |
| Example 8 | NSC-E | 3 | 4.8 | 0 | DPF-C | 3.2 | 4.8 | 0 | 83 | 92 | 86 | 100 | 20 | 360 | 35 |
| Example 9 | DPF-A | 3 | 0 | 72 | NSC-D | 3.2 | 4.8 | 0 | 98 | 95 | 92 | 100 | 10 | 350 | 20 |
| Example 10 | DPF-C | 3 | 4.8 | 0 | NSC-D | 3.2 | 4.8 | 0 | 98 | 94 | 92 | 100 | 0 | 330 | 35 |
| Example 11 | DPF-C | 3 | 4.8 | 0 | NSC-E | 3.2 | 12 | 0 | 95 | 92 | 90, | 100 | 0 | 330 | 35 |

1) 143.8 mm in diameter × 150 mm in length DPF-A: ceramic fiber, lamination structure, porosity of 80% DPF-B: SiC, integral structure, porosity of 60% DPF-C: SiC, integral structure, porosity of 60% (catalyst support: 120g/L alumina) NSC-D: honeycomb structure, joined structure, porosity of 60% NSC-E. F: cordierite, integral structure (catalyst support: 120g/L alumina) 2) Distance from engine 3) Maximum temperature of DPF during 10·15 mode measurement 4) Time until DPF reaches its maximum temperature after exhaust gas reaches its maximum temperature

[Example 2]

Next, an example (example 2) of an exhaust gas cleanup system 10 using the honeycomb filter 130 and the honeycomb structure 140 is described.

· Method for manufacturing honeycomb filter 130 (DPF-B)

7000 parts by weight of $\alpha$-type silicon carbide powder (average particle diameter: 10$\mu$m), 3000 parts by weight of $\alpha$-type silicon carbide powder (average particle diameter: 0.5$\mu$m), 1000 parts by weight of acryl particles as a pore forming agent, and 3700 parts by weight of water were mixed, and furthermore, 2000 parts by weight of methylcellulose as an organic binder, 300 parts by weight of glycerin as a plasticizer, and 660 parts by weight of a lubricant (product name: UNILUB made by NOF Corporation) were added and kneaded, whereby a green body was obtained. This green body was extruded into a rectangular column shape having a plurality of through holes arranged side by side in the longitudinal direction to obtain a raw molding. Next, the obtained raw molding was dried, and the plurality of through holes were alternately clogged by using said green body so that a through hole having one end face clogged and the other end face open and a through hole with one end face open and the other end face cloggedwere alternately arranged side by side. Then, the molding was degreased in the air of 400°C for 3 hours and fired at 2200°C for 3 hours under the atmosphere of argon at a normal pressure, whereby a fired material made of silicon carbide with a size of 34.3mm×34.3mm×150mm, a thickness of the wall part 33 of 0.3mm, and a cell density of 46.5/cm$^2$ (300 cpsi) was prepared. Next, the sealing material paste was applied so as to be a 1mn thickness on the outer face 13 of this fired material and a plurality of fired materials were bonded by a sealing material layer 26 dried and solidified at 120°C, and shaped into a cylindrical shape (143.8mm$\phi$ in diameter x 150mm in height) by using a diamond cutter or the like. In this cylindrical material, the outer circumferential surface at the portions without the through holes 12 being open was coated by a 0.5mm thickness of coating material paste to form a coating material layer 27, whereby a filter support (meaning the honeycomb filter before supporting the catalyst) was obtained through a process of drying at 120°C for 1 hour. The sealing material paste used herein had a composition of 30 weight percent of alumina fibers (fiber length: 20$\mu$m), 21 weight percent of silicon carbide particles (average particle diameter: 0.6$\mu$m), 15 weight percent of silica sol (silica content in sol: 30 weight percent), 5.6 weight percent of carboxymethylcellulose, and 28.4 weight percent of water. The coating material paste used herein had a composition of 23.3 weight percent of silica-alumina fibers (fiber length: 5 through 100$\mu$m), 30.2 weight percent of silicon carbide particles (average particle diameter: 0.3$\mu$m), 7 weight percent of silica sol (silica content in sol: 30 weight percent), 0.5 weight percent of carboxy methyl cellulose, and 39 weight percent of water. LaCoO$_3$ was supported on the obtained honeycomb filter support in the same manner as in the case of DPF-A described above so that the supporting amount became 30g/L, whereby the honeycomb filter 130 (DPF-B) shown in FIG. 8 was obtained. The porosity of the obtained honeycomb filter 130 (DPF-B) was 60%, and the percentage (unit area ratio) of the total sectional area of the fired materials to the sectional area of the honeycomb filter 130 (DPF-B) was 93.5%.

· Method for manufacturing honeycomb structure 140 (NSC-E)

A commercially available cordierite support was prepared. This cordierite support had a diameter of 143.8mm, a length of 150mm, a through hole size of a 4.5mm square, a thickness of the wall part 33 of 2mm, and a cell density of 2.4/cm$^2$ (15.2 cpsi). 100 parts by weight of $\gamma$ alumina powder (average particle size: 2$\mu$m) was mixed with 200 parts by weight of water, and 20 parts by weight of nitric acid was added, whereby a wash-coating slurry was prepared. The cordierite support was soaked in this slurry and taken out, and then extra slurry was removed, and the cordierite support was dried at 250°C for 15 minutes. The alumina supporting amount was 120 g/L in terms of the weight per unit volume of the honeycomb structure. Next, a 0.5 mol/L solution of barium nitrate was prepared, and this barium nitrate solution was absorbed in the cordierite support so that the barium supporting amount became 0.3 mol/L in terms of the number of moles of barium per unit volume of the honeycomb structure, dried at 250°C for 15 minutes, and fired at 500°C for 30 minutes. Next, a 0.25 mol/L solution of platinum nitrate was prepared. This platinum nitrate solution was absorbed in the honeycomb support so that the platinum supporting amount became 5.0 g/L in terms of the weight of platinum per unit volume of the honeycomb structure (12g in terms of the weight of platinum with respect to the honeycomb structure), and fired at 600°C for 1 hour. Thereby, a honeycomb structure 140 (NSC-E) as the NOx storage catalyst shown in FIG. 9 was obtained. The specific surface area per unit volume of the obtained honeycomb structure 140 (NSC-E) was 25000 m$^2$/L.

In the experiment example 2, the DPF-B was disposed at a position of 1m in length from the engine 20 and the NSC-E was disposed at a position of 3m in length from the engine 20. The NSC-D was disposed at a position of 3m in length from the engine 20, and the DPF-A was disposed at a position of 3.2m in length from the engine 20. This is the example 2.

Next, examples (examples 3, 6, and 9) of exhaust gas cleanup systems 10 using the honeycomb filter 30 and the honeycomb structure 40 are described.

[Examples 3, 6, and 9]

In the examples 3, 6, and 9, the same DPF-A and NSC-D as those of the example 1 were used. In the example 3, a DPF-A sample was disposed at a position of 1m in length from the engine 20, and a NSC-D sample was disposed at a position of 1.2m in length from the engine 20. In the example 6, a NSC-D was disposed at a position of 3m in length from the engine 20, and a DPF-A was disposed at a position of 3.2m in length from the engine 20. In the example 9, a DPF-A sample was disposed at a position of 3m in length from the engine 20, and an NSC-D sample was disposed at a position of 3.2m in length from the engine 20.

[Example 4]

Next, an example (example 4) of an exhaust gas cleanup system 10 using the honeycomb filter 30 and the honeycomb structure 140 is described.

· Method for manufacturing honeycomb structure 140 (NSC-F)

A commercially available cordierite support similar to that of the above-described NSC-E was prepared, and in the same manner as in the case of the above - described NSC- E, barium and platinum were supported on this cordierite support so that the barium supporting amount became 0.3 mol/L in terms of the number of moles of barium per unit volume of the honeycomb structure, and the platinum supporting amount became 20 g/L in terms of the weight of platinum per unit volume of the honeycomb structure (4.8g in terms of the weight of platinum with respect to the honeycomb structure), whereby a honeycomb structure (NSC-F) as the NOx storage catalyst shown in FIG. 9 was obtained. The specific surface area per unit volume of the obtained honeycomb structure 140 (NSC-F) was 25000 $m^2$/L. In the example 4, a DPF-A and an NSC-F were used. In the example 4, a DPF-A sample was disposed at a position of 1m in length from the engine 20, and an NSC-F sample was disposed at a position of 3.0m in length from the engine 20.

[Example 5]

Next, an example (example 5) of an exhaust gas cleanup system 10 using the honeycomb filter 130 and the honeycomb structure 140 is described. In this example 5, a DPF-B and an NSC-F were used. In this example 5, a DPF-B sample was disposed at a position of 1m in length from the engine 20, and an NSC-F sample was disposed at a position of 3.0m in length from the engine 20.

[Examples 7 and 10]

Next, examples (examples 7 and 10) of exhaust gas cleanup systems 10 using the honeycomb filter 130 and the honeycomb structure 40 are described.

· Method for manufacturing honeycomb filter 130 (DPF-C)

A filter support made of silicon carbide like the above-described DPF-B was prepared. Next, 100 parts by weight of γ alumina powder (average particle diameter: 2μm) was mixed with 200 parts by weight of water and added with 20 parts by weight of nitric acid to prepare a slurry, and the filter support was soaked in this slurry and taken out, and then extra slurry was removed, and the filter support was dried at 250°C for 15 minutes. The alumina supporting amount was 120 g/L in terms of the weight per unit volume of the honeycomb filter. Next, a 0.25 mol/L solution of platinum nitrate was prepared. Then, this platinum nitrate solution was absorbed in the filter support so that the platinum supporting amount became 2.0 g/L in terms of the weight of the catalyst for exhaust gas purification per unit volume of the honeycomb filter (4.8g in terms of the weight of platinum with respect to the honeycomb structure), fired at 600°C for 1 hour, whereby the honeycomb filter 130 (DPF-C) shown in FIG. 8 was obtained. The porosity of the obtained honeycomb filter 130 (DPF-C) was 60%, and the percentage (unit area ratio) of the total sectional area of the fired materials to the sectional area of the honeycomb filter 130 (DPF-C) was 93.5%.

In the examples 7 and 10, a DPF-C and an NSC-D were used. In the example 7, an NSC-D was disposed at a position of 3m in length from the engine 20, and a DPF-C was disposed at a position of 3.2m in length from the engine 20. In the example 10, a DPF-C was disposed a position of 3m in length from the engine 20, and an NSC-D was disposed at a position of 3m in length from the engine 20.

[Examples 8 and 11]

Next, examples (examples 8 and 11) of exhaust gas cleanup systems 10 using the honeycomb filter 130 and the honeycomb structure 140 are described. In the examples 8 and 11, a DPF-C and an NSC-E were used. In the example 8, an NSC-E was disposed at a position of 3m in length from the engine 20, and a DPF-C was disposed at a position of 3.2m in length from the engine 20. In the example 11, a DPF-C was disposed at a position of 3m in length from the engine 20, and an NSC-E was disposed at a position of 3m in length from the engine 20.

[Porosity measurement]

The porosities of DPF-A through C and NSC-D were measured. The porosities were calculated by the following formula (1):

$$\textbf{Porosity \% = 100×(1-G/((V-K)×D)); Formula (1)}$$

upon measuring the dried weight G (g) of the honeycomb filter, the volume V ($cm^3$) of the external form of the honeycomb filter, the volume K ($cm^3$) of the through holes, and the true density D ($g/cm^3$) of the materials forming the honeycomb filter 30.

[Specific surface area measurement]

The specific surface areas of the NSC-D through F were measured. First, the volumes of the porous honeycomb units and the sealing material were actually measured, and the ratio A (volume %) of the materials of the units to the volume of the honeycomb structure was calculated. Next, the BET specific surface area B ($m^2/g$) per unit weight of the porous honeycomb units was measured. The BET specific surface area was measured by the single point method according to JIS-R-1626 (1996) provided in Japanese Industrial Standards by using a BET measurement device (Micromeritics FlowSorb II-2300 made by Shimazu Corporation). For measurement, a sample cut into a columnar small piece (15mm$\phi$ in diameter $\times$ 15mm in height) was used. Then, the apparent density C (g/L) of the porous honeycomb units was calculated from the weight and external form volume of the porous honeycomb units, and the specific surface area S ($m^2/L$) of the honeycomb structure was calculated by the following formula (2). The specific surface area of the honeycomb structure mentioned herein means the specific surface area per apparent volume of the honeycomb structure.

$$\textbf{S (m}^\textbf{2}\textbf{/L) = (A/100)×B×C; Formula (2)}$$

[Exhaust gas conversion/purification rate measurement]

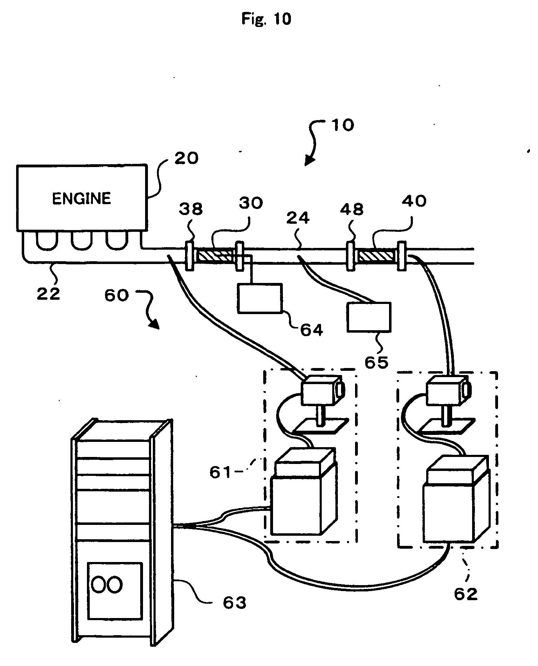

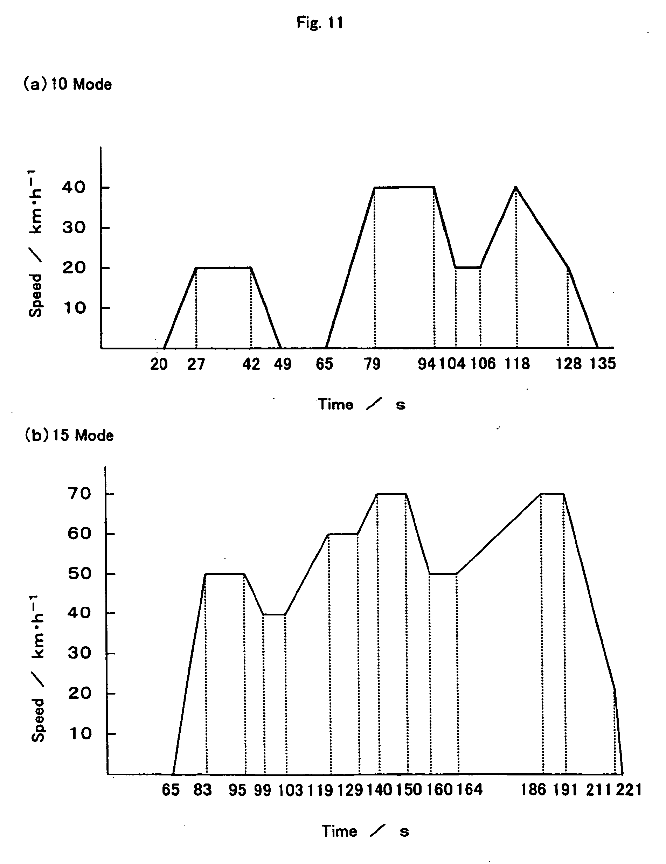

Exhaust gas conversion/purification rates of the examples 1 through 11 were measured. This measurement was made by using the exhaust gas cleanup measuring device 60 shown in FIG. 10. The exhaust gas cleanup measuring device 60 includes an exhaust gas cleanup system 10 including the honeycomb filter 30 and the honeycomb structure 40, a gas sampler 61 that samples an exhaust gas before passing through the honeycomb filter 30, a gas sampler 62 that samples the exhaust gas after passing through the honeycomb structure 40, a gas analyzer 63 that analyzes the concentrations of harmful substances contained in the exhaust gas, a temperature measuring device 64 that measures the temperature of the honeycomb filter 30 by a thermocouple, and a PM counter 65 that measures the amount of PM on the downstream of the honeycomb filter 30. Next, the measuring procedures are described. First, an exhaust gas from the engine 20 was flown through the above-described examples 1 through 11. In this measurement, the engine 20 was driven to perform 3 cycles according to the 10-15 mode exhaust gas measuring method of the diesel-powered automobile shown in FIG. 11. Then, the concentrations of carbon monoxide (CO), hydrocarbon (HC), and nitrogen oxide (NOx) contained in the exhaust gases sampled by the gas samplers 61 and 62 were measured by a gas analyzer 29. The conversion rates were calculated by the following formula (3) by using the concentration C0 contained in the exhaust gas before coming into contact with the DPF and NSC and the concentration Ci contained in the exhaust gas after coming into contact with DPF and NSC. Based on a change in weight of the honeycomb filter between before the measurement and after the measurement, the PM trapping rate was measured. When the PM amount that could not be trapped in the honeycomb filter 30 and exhausted to the downstream was counted from the number of PM particles by using the PM counter 65 (a condensation particle counter 3022A-S made by TSI), the trapping rate was 100% in all examples. The total produced amount of PM produced in this test was investigated in advance, and the result amount was 3.5g. Therefore, the regenerating rate was calculated from the PM deposit amount with respect to the total produced amount of PM (difference in weight between before the measurement and after the measurement). In addition, when the exhaust gas temperature was checked in advance, it was found that the exhaust gas reached the maximum temperature in a timing of 120 seconds in the 15 mode. Then, the time change in temperature of the honeycomb filter was measured by the temperature measuring device 64, and the time from the point of 120 seconds until the honeycomb filter reached the maximum temperature was calculated.

$$\textbf{Conversion rate (\%) = (C0-Ci)/C0} \times \textbf{100; Formula (3)}$$

[Measuring results]

The disposition of the DPFs andNSCs, platinum supporting amounts, conversion rates of CO, HC, and NOx, PM trapping rates, DPF regenerating rates, the maximum temperatures of DPFs during 10-15 mode measurement, and the times taken until the DPFs reached the maximum temperatures after the exhaust gas reached the maximum temperature of the examples 1 through 11 are shown in Table 2. In the examples 1 through 3, the conversion/purification rates of Co, HC, NOx, and PM were 90% or more and the regenerating rates were also high as 50% or more. The reason for the high regenerating rates is presumed that the catalyst supported in the DPF easily reaches the temperature that makes the catalyst to sufficiently act from the fact that the maximum temperature is high and the time to reach the maximum temperature is short. Particularly, the DPFs of examples 1 and 3 were easily regenerated even though the platinum supporting amounts were small. On the contrary, in the examples 6 through 11, regenerating rates were low as compared to the examples 1 through 3. In the dispositions of NSCs and DPFs of examples 6 through 8(corresponding to the construction of Patent Document 1), the conversion rates of NO and CO were low. The reason for this is presumed that NO was produced and exhausted when $NO_2$ burns PM, and PM was imperfectly burned and CO was produced and exhausted. From these results, it was found that by disposing the DPF at a position of an exhaust path length of 1m or less from the engine 20 and the NSC at a position of an exhaust path length of 3m or less from the engine 20, PM was easily burned, the honeycomb filter was easily regenerated, and a plurality of harmful substances (CO, HC, NOx, and PM) could be converted and could be purified. Particularly, it was found that among the DPFs, the DPF-A burned PM and was easily regenerated, and in among NSCs, the NSC-D converted harmful substances by a small platinum supporting amount.

The present invention claims priority based on the Japanese Patent Application No. 2004-252889 filed on August 31, 2004.

Industrial Applicability

The exhaust gas cleanup system of the invention is usable in industries relating to power machinery and vehicles equipped with internal combustion engines, such as the automobile industry and motorcycle industry.

**Claims**

**1.** An exhaust gas cleanup system which cleans up an exhaust gas exhausted from an internal combustion engine, comprising:

a first cleanup apparatus (30) that supports a predetermined amount of a first catalyst and includes a plurality of through holes and a porous wall part which contains ceramic particles and separates the through holes, where one of two side end faces of the plurality of through holes is clogged so that the wall part is made to function as a filter, which traps particulate materials contained in the exhaust gas; and
a second cleanup apparatus (40) that supports a predetermined supporting amount of a second catalyst and converts the exhaust gas which has passed through the first cleanup apparatus (30), wherein
the first cleanup apparatus (30) is disposed at a position of an exhaust path length of 1 m or less from the internal combustion engine (20).

**2.** The exhaust gas cleanup system according to Claim 1, wherein the first cleanup apparatus has a porosity of 60% or more.

3. The exhaust gas cleanup system according to Claim 1 or 2, wherein the first cleanup apparatus is a honeycomb filter formed by laminating, in the longitudinal direction, two or more sheet-like members having a plurality of through holes so that the through holes become communicating holes that communicate with each other.

4. The exhaust gas cleanup system according to Claim 3, wherein the honeycomb filter is formed so that communicating holes having one side end faces being clogged and the other side end faces being open and communicating holes having one side end faces being open and the other side end faces being clogged are alternately arranged side by side.

5. The exhaust gas cleanup system according to Claim 3 or 4, wherein the honeycomb filter is mainly made of one or more materials selected from among inorganic fibers and inorganic foams.

6. The exhaust gas cleanup system according to any of Claims 1 through 5, wherein the second cleanup apparatus is disposed at a position of an exhaust path length of 3m or less from the internal combustion engine.

7. The exhaust gas cleanup system according to any of Claims 1 through 6, wherein the second cleanup apparatus is a honeycomb structure including porous honeycomb units that have a plurality of through holes and a sectional area of $50cm^2$ or less of a plane orthogonal to the through holes, and a sealing material layer that joins two or more of the porous honeycomb units on their outer faces with no through holes being open.

8. The exhaust gas cleanup system according to Claim 7, wherein in the porous honeycomb unit, a sectional area of a plane orthogonal to the through holes is $5cm^2$ or more.

9. The exhaust gas cleanup system according to Claim 7 or 8, wherein the percentage of a total sectional area of the porous honeycomb units to a sectional area of the honeycomb structure is 85% or more.

10. The exhaust gas cleanup system according to any of Claims 7 through 9, wherein the porous honeycomb unit is formed to contain at least ceramic particles and inorganic fibers.

11. The exhaust gas cleanup system according to any of Claims 1 through 10, wherein the first catalyst is an oxide having a perovskite structure.

12. The exhaust gas cleanup system according to Claims 1 through 11, wherein the second catalyst is an oxidation catalyst and an NOx storage agent.

13. The exhaust gas cleanup system according to Claim 12, wherein the second catalyst contains one or more kinds selected from a group consisting of precious metals, alkalimetals, and alkaline earth metals.

**Patentansprüche**

1. Abgasreinigungssystem, das ein aus einem Verbrennungsmotor ausströmendes Abgas reinigt, umfassend:

eine erste Reinigungsvorrichtung (30), die eine vorbestimmte Menge eines ersten Katalysators trägt und eine Mehrzahl an Durchgangsbohrungen und einen porösen Wandungsabschnitt, der keramische Partikel und die Durchgangsbohrungen trennt, umfasst,
wo eine der zwei Seitenendflächen der Mehrzahl der Durchgangsbohrungen derart zusammengeballt ist, dass der Wandungsabschnitt als ein Filter funktioniert, der in dem Abgas enthaltende partikelförmige Materialien abfängt; und eine zweite Reinigungsvorrichtung (40), die eine vorbestimmte Menge eines zweiten Katalysators trägt und das Abgas umwandelt, das die erste Reinigungsvorrichtung (30) durchlaufen hat, wobei
die erste Reinigungsvorrichtung (30) an einer einer Abgaspfadlänge von 1 m oder weniger von dem Verbrennungsmotor (20) entsprechenden Position angeordnet ist.

2. Abgasreinigungssystem nach Anspruch 1, wobei die erste Reinigungsvorrichtung eine Porosität von 60% oder mehr hat.

3. Abgasreinigungssystem nach Anspruch 1 oder 2, wobei die erste Reinigungsvorrichtung ein wabenförmiger Filter ist, der durch Laminieren in Längsrichtung von zwei oder mehreren scheibenähnlichen, eine Mehrzahl an Durchgangsbohrungen aufweisende Elementen derart ausgebildet ist, dass die Durchgangsbohrungen miteinander in Verbindung stehende Verbindungsbohrungen ausformen.

4. Abgasreinigungssystem nach Anspruch 3, wobei der wabenförmige Filter derart ausgebildet ist, dass Verbindungsbohrungen aufweisend zusammengeballte Seitenendflächen und geöffnete andere Seitenendflächen und Verbindungsbohrungen aufweisend geöffnete Seitenendflächen und zusammengeballte andere Seitenendflächen wechselweise nebeneinander angeordnet sind.

5. Abgasreinigungssystem nach Anspruch 3 oder 4, wobei der wabenförmige Filter hauptsächlich aus einem oder mehren Materialien ausgewählt aus anorganischen Fasern oder organischen Schäumen ausgeformt ist.

6. Abgasreinigungssystem nach einem der Ansprüche 1 bis 5, wobei die zweite Reinigungsvorrichtung an einer einer Abgaspfadlänge von 3m oder weniger von dem Verbrennungsmotor (20) entsprechenden Position angeordnet ist.

7. Abgasreinigungssystem nach einem der Ansprüche 1 bis 6, wobei die zweite Reinigungsvorrichtung eine wabenförmige Struktur hat, die poröse wabenförmige Einheiten umfasst, die eine Mehrzahl an Durchgangsbohrungen und eine Querschnittsfläche von 50cm$^2$ oder weniger in einer Ebene senkrecht zu den Durchgangsbohrungen, und eine Dichtungsmaterialschicht aufweisen, die zwei oder mehrere der porösen wabenförmigen Einheiten an deren äußeren Fläche, die keine geöffneten Durchgangsbohrungen haben, verbindet.

8. Abgasreinigungssystem nach Anspruch 7, wobei in der porösen wabenförmigen Einheit eine Querschnittsfläche in einer Ebene senkrecht zu den Durchgangsbohrungen 5cm$^2$ oder mehr ist.

9. Abgasreinigungssystem nach Anspruch 7 oder 8, wobei der Prozentsatz einer Gesamtquerschnittsfläche der porösen wabenförmigen Einheiten zu einer Querschnittsfläche der wabenförmigen Struktur 85% oder mehr ist.

10. Abgasreinigungssystem nach einem der Ansprüche 7 bis 9, wobei die poröse wabenförmige Einheit ausgeformt ist, um wenigstens Keramikpartikel und anorganische Fasern zu beinhalten.

11. Abgasreinigungssystem nach einem der Ansprüche 1 bis 10, wobei der erste Katalysator ein Oxid ist, der eine Perowskitstruktur aufweist.

12. Abgasreinigungssystem nach einem der Ansprüche 1 bis 1, wobei der zweite Katalysator ein Oxidationskatalysator und ein NOx speichernder Agens ist.

13. Abgasreinigungssystem nach Anspruch 12, wobei der zweite Katalysator eine oder mehre Arten ausgewählt aus einer Gruppe bestehend aus Edelmetallen, Alkalimetallen und Alkalierdmetallen umfasst.

## Revendications

1. Système de nettoyage de gaz d'échappement qui nettoie un gaz d'échappement s'échappant d'un moteur à combustion interne, lequel comprend :

   un premier appareil de nettoyage (30) qui maintient une quantité prédéterminée d'un premier catalyseur et comprend plusieurs orifices traversants ainsi qu'une partie formant paroi poreuse qui contient des particules de céramique et sépare les trous traversants,
   l'une des deux faces d'extrémité latérales des orifices traversants étant obturée de sorte que la partie formant paroi est conçue pour fonctionner en tant que filtre, lequel piège les matières particulaires contenues dans le gaz d'échappement ; et
   un second appareil de nettoyage (40) qui maintient une quantité prédéterminée d'un second catalyseur et convertit le gaz d'échappement qui a traversé le premier appareil de nettoyage (30), dans lequel
   le premier appareil de nettoyage (30) est disposé à un emplacement d'une longueur de partie d'échappement, à 1 m ou moins du moteur à combustion interne (20).

2. Système de nettoyage de gaz d'échappement conformément à la revendication 1, dans lequel le premier appareil de nettoyage présente une porosité de 60% ou plus.

**3.** Système de nettoyage de gaz d'échappement conformément à la revendication 1 ou 2, dans lequel le premier appareil de nettoyage est un filtre en nid d'abeilles formé par stratification, dans le sens de la longueur, de deux ou plusieurs éléments en forme de feuille ayant plusieurs orifices traversants, lesquels trous devenant ainsi des orifices de communication qui communiquent les uns avec les autres.

**4.** Système de nettoyage de gaz d'échappement conformément à la revendication 3, dans lequel le filtre en nid d'abeilles est formé de sorte que les orifices de communication dont l'une des faces d'extrémité latérales est obturée et l'autre est ouverte et les orifices de communication dont l'une des faces d'extrémité latérales est ouverte et l'autre est obturée sont disposés côte à côte de manière alternée.

**5.** Système de nettoyage de gaz d'échappement conformément à la revendication 3 ou 4, dans lequel le filtre en nid d'abeilles est principalement constitué d'un ou plusieurs matériaux sélectionnés parmi des fibres inorganiques et des mousses inorganiques.

**6.** Système de nettoyage de gaz d'échappement conformément à l'une quelconque des revendications 1 à 5, dans lequel le second appareil de nettoyage est disposé à un emplacement d'une longueur de trajet d'échappement, à 3m ou moins du moteur à combustion interne.

**7.** Système de nettoyage de gaz d'échappement conformément à l'une quelconque des revendications 1 à 6, dans lequel le second appareil de nettoyage consiste en une structure en nid d'abeilles comprenant des unités en nid d'abeilles poreuses qui ont plusieurs orifices traversants et une zone transversale de 50 cm$^2$ ou mois d'un plan orthogonal aux orifices traversants, et une couche de matériau d'étanchéité qui joint deux ou plusieurs des unités en nid d'abeilles sur leurs faces extérieures sans qu'aucun orifice traversant ne soit ouvert.

**8.** Système de nettoyage de gaz d'échappement conformément à la revendication 7, dans lequel, dans l'unité en nid d'abeilles poreuse, une zone transversale d'un plan orthogonal aux orifices traversants mesure 5 cm$^2$ ou plus.

**9.** Système de nettoyage de gaz d'échappement conformément à la revendication 7 ou 8, dans lequel le pourcentage d'une zone transversale totale des unités en nid d'abeilles poreuses à une zone transversale de la structure en nid d'abeilles est de 85% ou plus.

**10.** Système de nettoyage de gaz d'échappement conformément à l'une quelconque des revendications 7 à 9, dans lequel l'unité en nid d'abeilles poreuse est formée de façon à contenir au moins des particules de céramique et des fibres inorganiques.

**11.** Système de nettoyage de gaz d'échappement conformément à l'une quelconque des revendications 1 à 10, dans lequel le premier catalyseur est un oxyde ayant une structure pérovskite.

**12.** Système de nettoyage de gaz d'échappement conformément aux revendications 1 à 11, dans lequel le second catalyseur est un catalyseur d'oxydation et un agent de stockage NOx.

**13.** Système de nettoyage de gaz d'échappement conformément à la revendication 12, dans lequel le second catalyseur contient une ou plusieurs sortes de matériaux sélectionnées parmi un groupe comprenant des métaux précieux, des métaux alcalins, et des métaux alcalino-terreux.

## Fig. 1

Fig. 2

(a)

(b)                                    (c)

Fig. 3

Fig. 4

(a)

(b)

HONEYCOMB STRUCTURE 40

Fig. 5

Exhaust gas
(before
removing PM)

Exhaust gas
(after
removing PM)

Fig. 6

(a)

NOx
CO
HC

N₂
CO₂
H₂O

(b)

(c)

Fig. 7

Fig. 8

(a)

HONEYCOMB UNIT 131

134

132

133

(b)

HONEYCOMB FILTER 130

135

132

131

Fig. 9

HONEYCOMB STRUCTURE 140

142

Fig. 10

Fig. 11

(a) 10 Mode

(b) 15 Mode

**REFERENCES CITED IN THE DESCRIPTION**

**Patent documents cited in the description**

- JP 2002153733 A
- JP 2000145430 B
- JP 2004252889 A